Europäisches Patentamt

European Patent Office

Office européen des brevets

(11) Publication number : **0 471 558 A2**

# EUROPEAN PATENT APPLICATION

(21) Application number : **91307475.3**

(22) Date of filing : **13.08.91**

(51) Int. Cl.⁵ : **A23D 9/00, A23P 1/08, A61K 9/42**

(30) Priority : **14.08.90 GB 9017800**

(43) Date of publication of application :
**19.02.92 Bulletin 92/08**

(84) Designated Contracting States :
**AT BE CH DE DK ES FR GB GR IT LI LU NL SE**

(71) Applicant : **UNILEVER PLC**
**Unilever House Blackfriars**
**London EC4P 4BQ (GB)**
(84) **GB**

(71) Applicant : **UNILEVER NV**
**Burgemeester s'Jacobplein 1 P.O. Box 760**
**NL-3000 DK Rotterdam (NL)**
(84) **BE CH DE DK ES FR GR IT LI LU NL SE AT**

(72) Inventor : **Izzard, Martin John**
**310c Newton Road**
**Rushden, Northants NN10 OSY (GB)**
Inventor : **Wilding, Peter**
**113 Langham Road, Raunds**
**Wellingborough, Northants NN9 6LV (GB)**
Inventor : **Lane, Sally Jane**
**18 Widecombe Close**
**Bedford MK40 3BL (GB)**
Inventor : **Patrick, Alan James,**
**22 Holmes Avenue, Raunds**
**Wellingborough, Northants NN9 6SZ (GB)**
Inventor : **Hammond, Kevin**
**Alderside, 1 Porto Hey Road**
**Irby, Wirral, Merseyside (GB)**

(74) Representative : **Ford, Michael Frederick et al**
**MEWBURN ELLIS 2 Cursitor Street**
**London EC4A 1BQ (GB)**

(54) **Moisture barrier and its preparation.**

(57)    An edible moisture barrier film comprises droplets of lipid component (74-95% of the film) dispersed in an edible biopolymer (26-5 wt% of the film). The total water content of the film is less than 5 wt%. The films can be made from emulsions which are cast and then dried.

## Fig.1.

EP 0 471 558 A2

The present invention relates to a moisture barrier and to a process for its preparation.

The study of the high internal phase emulsions has been carried out for many years and the basic theory behind their preparation and structure has been discussed by K J Lissant in "Surfactant Science Series", Volume 6, "Emulsion and Emulsion Technology", Part 1, edited by K J Lissant, Marcel Dekker Inc., New York, 1974. In this work Lissant discusses the geometrical packing of droplets in high internal phase emulsions and suggests that especial care must be exercised in selecting emulsifying agents for such compositions and that, in the region of 94-97% volume percentage of internal phase, critical changes occur in the high internal phase emulsion (HIPE). Beerbower, Nixon, Philippoff and Wallace of Esso Research and Engineering Company have studied high internal phase emulsions as safety fuels, such compositions containing at least 97% by weight of hydrocarbon fuel (ref. American Chemicals Society, Petrochemical Pre-prints, 14, 79-59, 1969).

US 3,434,843 discloses a food product having a hydrophilic film former as the external phase, e.g. caseinate, and a hydrophobic internal phase. The ratio of the external phase to internal phase can range from 10:150 to 10:1. However, this requires the inclusion of a humectant such as glycerol which acts to plasticise the proteins or polymers. Up to 30% of the structure is humectant.

It is also known, from GB2217175, to make a dry, free-flowing, particulate animal feed stuff from a lipid-protein emulsion. The composition contains 70-95% by weight lipid of which 10-50% by weight of the lipid is free fatty acid.

According to a first aspect of the present invention there is provided a film comprising a matrix of edible biopolymer enclosing dispersed droplets of lipid component, the biopolymer being present in the range of 26 to 5wt% of the film and the lipid component being present in the range of 74-95% of the film, the total water content of the film being less than 5wt%.

The biopolymer is a proteinaceous and/or polysaccharide material which may be naturally occurring or it may be chemically, enzymatically and/or physically modified prior to use. Synthetic imitations of natural materials and their derivatives or closely similar materials may also be used. Suitable materials include caseinate, agar, starches, alginates, gelatin, gums such as locust, carrageenan and xanthan, celluloses such as hydroxypropylmethylcellulose (HPMC), or mixtures thereof, particularly caseinate-gelatin mixtures.

The present materials are non-toxic and suitable for internal or external human use e.g. as part of a food product or in a therapeutic or pharmacological application.

The polymeric material exhibits a cellular structure. The cell diameter can typically range from submicron e.g. about 0.5 μm to several micron e.g. 50 μm although a small number of cells may have much larger diameter, say up to 1mm. The final thickness of the film should be taken into account when selecting cell sizes if the cell size approaches the thickness of the film too closely then leakage of the lipid component may well occur typically mean cell size should be at most less than half the thickness of the final film. This sort of ratio enables the wet film to be cast without rupturing the cells.

Fats, oils and/or waxes may be used as the lipid component. Most oils may be used. One criterion for choosing a lipid is for it to have the desired solid content at the temperature at which it is to be used so that the properties (mechanical, impermeability... etc.,) of the barrier can be adjusted, depending on the end use, for maximum effectiveness. Such a temperature might be room temperature or -20°C. Suitable oils and fats include sunflower oil, palm oil, ground nut oil, olive oil, coconut oil, hardened coconut oil, bean oils, sesame oil, sucrose polyester, and most usual food oils and animal fats, fractions and mixtures thereof. Flavouring oils may also be used.

Films of this type have very low water vapour permeability. This makes them ideal for use as a moisture barrier. These films may further be translucent or even transparent.

According to the second aspect of the invention there is provided a process for preparing a film of an edible biopolymer and a lipid component, which comprises homogenising 40-65wt% of the biopolymer solution with 60-35% lipid component, casting a film and drying the film to a final water content of less than 5wt% of the film. Suitably the wt% of the polymer in the continuous phase in the emulsion is 5-20wt%.

In carrying out the present process an emulsion is first formed with the internal phase comprising 35 to 60% of the total weight and having the desired droplet size for the final material. The two phases may be homogenised by using a high shear rate.

The drying step may be carried out by a variety of known matters, including air-drying overnight or more rapidly at elevated temperature.

The resulting emulsion may be additionally stabilised by use of an emulsifier. Suitable emulsifiers will depend on the system in question but would generally be a food grade oil-in-water emulsifier such as monoglycerides or sugar esters. Proteinaceous biopolymers may also be used as emulsifiers, e.g. caseinate or protein hydrolysates. Typical levels of emulsifiers range from 0.1 to 20 wt% with respect to the wet continuous phase.

Additional treatment of the polymer material in the continuous phase may be used to modify the mechanical properties of the continuous phase in the dried film. These treatments may include heating, denaturing, chemical cross-linking e.g. with dialdehyde starch, gluteraldehyde or dialgenic acid, ion cross-linking and pH adjustment.

The step of cross-linking the continuous phase may be done before or after drying by submerging the material in a solution of cross-linking agent, e.g. gluteraldehyde or liquid smoke. The barrier may then be washed, e.g. with water and air dried on a PTFE plate. The cross-linking agent can be added at the beginning of the process but care must be taken that cross-linking does not occur before the film has been cast.

Moisture barriers made in accordance with the present invention have many uses. These include use as packaging materials, including use as packaging for use in microwave ovens and freezers. Current synthetic packaging materials contain chemical plasticises, which over a period of time may seep into the top layers of the packaged foodstuff. A further use for edible barriers made in accordance with the invention is in a food item, between components of differing water content.

Embodiments of the invention will now be described by way of example and with reference to the figure which shows a transmission electron micrograph of a barrier material according to one embodiment of the invention.

Example 1

A translucent barrier containing 88% coconut oil was prepared as follows: -

A solution containing 11% sodium caseinate was prepared using 110g sodium caseinate and 900g $H_2O$. The caseinate was added to cold water, then stirred and heated to dissolve.

2000g of hot coconut oil was mixed with the hot sodium caseinate solution at 80°C and homogenised at 2000 psi three times.

Gelatin 200 Bloom was added at 2.5% to the resulting emulsion (190g emulsion + 5g gelatin). This was heated and stirred to dissolve the gelatin and sonicated to remove air bubbles. The mixture was then spread with a ruler onto hot PTFE plates with 3 layers of autoclave tape as spacers. After drying overnight at room temperature, the layer was removed from the plate. The translucent film had a thickness of 0.1mm and a permeability of about 5.7g mil/m²/day-/mmHg.

Example 2

As example 1 except the level of coconut oil used was 1000g. The barrier obtained contained 84% coconut oil, 1.8% moisture and had a permeability of about 8g mil/m²/day/mmHg.

Example 3

As example 1, sunflower oil was used instead of coconut oil.

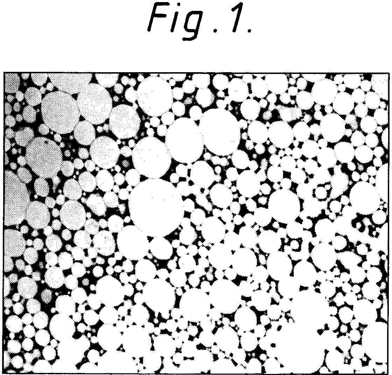

The barrier obtained was optically transparent and showed little sign of oil leakage. The barrier contained 91% oil, 2% water and had a permeability of 60 gmil/m²/day/mmHg. Inspection of the sample by transmission electron microscopy revealed that the oil droplets were close packed and significantly distorted (Fig. 1).

Example 4

As example 3. The barrier obtained was crosslinked by soaking in a 10% solution of glutaraldehyde for 30 minutes at room temperature. The barrier obtained was then gently washed under a running tap for ten minutes and dried by standing on a PTFE plate. The barrier obtained contained 89% Sunflower oil, 1.7% water and had a permeability of 66 gmil/m²/day/mmHg.

Example 5

A barrier containing 74.5% Palm Oil 43 was prepared as follows:-

Gelatin 200g + Sodium Caseinate 20g were dry mixed in a beaker. These were added slowly with stirring to 100g of cold water.

The mixture was heated in a microwave oven to dissolve the biopolymers.

700g of liquid P043 was added to warm (>50°C) biopolymer solution and gently stirred to form a coarse oil in water emulsion. It was important that very little air be incorporated into the emulsion at this stage. The emulsion at 70°C was then homogenised at 2000 psi four times to produce a creamy viscous liquid.

A perspex block 30 cm x 30 cm x 12 mm was equipped with three strips of autoclave tape down each side to act as a spacer. This was then placed in an oven at 45°C and left for one hour. The perspex block was then placed on a level surface and approximately 30 cm³ of the warm emulsion poured on to the nearest part of the plate. A perspex ruler which had been previously warmed to 45°C was then smoothly drawn across the block in order to spread the emulsion evenly over the whole of the block. The emulsion set to a gel containing fat droplets as it cooled down to room temperature. The gel was then allowed to dry overnight at room temperature.

The barrier was carefully removed from the block and was found to contain 74. 5% palm oil 43 and 3. 8% water. It was 0.16 mm thick and had a permeability of 30 gmil/m²/day/mmHg.

Example 6

A barrier containing 88.9% Palm Oil 43 was prepared as example 5 using 1100g of Palm Oil 43, 780g water, 20g sodium caseinate and 100g Gelatin 200.

The barrier obtained contained 88.9% Palm Oil 43, 1.3% water and had a permeability of 12 gmil/m²/day/mmHg.

## Claims

1. A film comprising a matrix of edible biopolymer enclosing dispersed droplets of lipid component, the biopolymer being present in the range of 26 to 5wt% of the film and the lipid component being present in the range of 74-95% of the film, the total water content of the film being less than 5wt%.

2. A film according to claim 1 wherein the biopolymer is selected from caseinate, agar, starches, alginates, gelatin, gums including locust, carrageenan and xanthan, celluloses including hydroxypropylmethylcellulose (HPMC), and mixtures thereof.

3. A film according to claim 1 or claim 2 wherein the biopolymer is a caseinate-gelatin mixture.

4. A film according to any one of claims 1 to 3 wherein fats, oils and/or waxes are used as the lipid component.

5. A film according to claim 4 wherein the lipid component is selected from food oils including sunflower oil, palm oil, ground nut oil, olive oil, coconut oil, hardened coconut oil, bean oils, sesame oil, sucrose polyester, and animal fats, fractions and mixtures thereof.

6. A film according to any one of the preceding claims having a cellular structure, the majority of cells having a diameter in the range of 0.5 $\mu$m to 50 $\mu$m.

7. A film according to claim 6 wherein the mean cell size is at most less than half the thickness of the final film.

8. A food, therapeutic or pharmacological product comprising a film according to any one of the preceding claims.

9. A process for preparing a film of an edible biopolymer and a lipid component, which comprises homogenising 40-65wt% of the biopolymer solution with 60-35% lipid component casting a film and drying the film to a final water content of less than 5wt% of the film.

10. A process according to claim 9 wherein the wt% of the polymer in the continuous phase in the emulsion is 5-20wt%.

11. A process according to claim 9 or 10 wherein the emulsion is additionally stabilised by an emulsifier.

12. A process according to claim 11 wherein the emulsifier is present at a level in the range of from 0.1 to 20 wt% with respect to the wet continuous phase.

13. A process according to any one of claims 9-12 which includes additional treatment of the polymer material in the continuous phase.

14. A process according to claim 13 wherein said additional treatment includes the step of cross-linking the continuous phase.

# Fig .1.